# DEMANDE DE BREVET EUROPEEN

(11) **EP 4 797 109 A1**
(43) Date de publication de la demande: **26.08.2026**
(21) Numéro de dépôt: 26159401.4
(22) Date de dépôt: 18.02.2026
(51) Int. Cl.: G06F 15/78

(54) **CIRCUIT DE CALCUL COMPRENANT UN COEUR DE CALCUL À ARCHITECTURE PIPELINE RISC-V AMÉLIORÉE**

(30) Priorité: 24.02.2025 FR 2501878
(71) Demandeur: STMicroelectronics International N.V., 1228 Plan-les-Ouates, Geneva (CH)
(72) Inventeur: SPAGNOLO, Tommaso, 20133 MILANO (IT); MASSA, Riccardo, 20900 MONZA (MONZA-BRIANZA) (IT); BOESCH, Thomas, 6821 ROVIO (CH); DESOLI, Giuseppe, 22042 SAN FERMO DELLA BATTAGLIA (IT); GRILLOTTI, Filippo, 20131 MILANO (IT)
(74) Mandataire: Cabinet Beaumont

(57) **Abrégé**

La présente description concerne un circuit de calcul (100) comprenant :
- au moins un cœur de calcul (102) basé sur une architecture sur une architecture en pipeline à ordinateur à jeu d'instructions réduit, RISC-V ;
- un ou plusieurs circuits de mémoire (128) configurés pour mettre en œuvre un calcul en mémoire, IMC ;
et dans lequel le cœur de calcul comprend un étage d'exécution (108) configuré pour utiliser lesdits un ou plusieurs circuits de mémoire pour mettre en œuvre l'IMC.

## Description

### Domaine technique

La présente description concerne de façon générale le domaine des circuits et dispositifs de calcul à ordinateur à jeu d'instructions réduit, RISC-V. La présente description concerne également les architectures matérielles destinées à accélérer la charge de travail de l'intelligence artificielle, IA.

### Technique antérieure

Les progrès rapides de l'IA et de l'apprentissage automatique, ML, ont introduit des exigences sans précédent en termes de calcul, en particulier avec l'essor des applications d'apprentissage profond dans divers domaines tels que les soins de santé, les systèmes autonomes et le traitement du langage naturel. Ces exigences en termes de calcul sont particulièrement difficiles à satisfaire pour des dispositifs de calcul périphériques, qui sont limités par des ressources de puissance et de mémoire restreintes.

Les architectures de calcul classiques, y compris les CPU (de l'anglais « Central Processing Units », unités centrales de traitement) et les GPU (de l'anglais « Graphics Processing Units », unités de traitement graphique), peinent à gérer efficacement ces tâches en raison du mouvement fréquent des données entre la mémoire et les unités de traitement, un phénomène souvent appelé "mur de la mémoire". Ce goulot d'étranglement augmente considérablement la latence et la consommation d'énergie, ce qui rend difficile de répondre aux exigences de systèmes embarqués économes en énergie. Par ailleurs, l'approche inhérente au calcul en série d'une CPU n'est pas bien adaptée à la charge de travail de l'IA qui nécessite une parallélisation poussée du calcul.

Les unités de traitement neuronal, NPU, ont été développées pour offrir des circuits de calcul adaptés aux applications d'IA et de ML. Toutefois, ces circuits pourraient être trop coûteux pour être envisagés comme dispositifs bas de gamme en raison de leur impact élevé sur la surface de silicium requise et la puissance.

### Résumé de l'invention

Il existe un besoin de proposer un circuit de calcul adapté à des exigences de calcul élevées et qui ne présente pas au moins une partie des inconvénients des solutions connues.

Un mode de réalisation pallie tout ou partie des inconvénients des solutions connues et prévoit un circuit de calcul comprenant :
- au moins un cœur de calcul basé sur une architecture en pipeline RISC-V ;
- un ou plusieurs circuits de mémoire configurés pour mettre en œuvre un calcul en mémoire, IMC ;
et dans lequel le cœur de calcul comprend un étage d'exécution configuré pour utiliser lesdits un ou plusieurs circuits de mémoire pour mettre en œuvre l'IMC.

Selon un mode de réalisation particulier, au moins l'un desdits un ou plusieurs circuits de mémoire est intégré dans le cœur de calcul et configuré pour être utilisé en tant qu'unité fonctionnelle pour l'IMC de l'étape d'exécution du cœur de calcul.

Selon un mode de réalisation particulier, le circuit de calcul comprend en outre une interconnexion reliant le cœur de calcul à au moins une mémoire à couplage étroitement serré, TCM, et à un bus auquel une mémoire externe est reliée.

Selon un mode de réalisation particulier, ledit au moins un TCM correspond à au moins l'un desdits un ou plusieurs circuits de mémoire.

Selon un mode de réalisation particulier, l'étage d'exécution du cœur de calcul comprend au moins un contrôleur de flux et au moins l'un desdits un ou plusieurs circuits de mémoire est connecté au contrôleur de flux par l'intermédiaire de liaisons de flux d'entrée et de sortie.

Selon un mode de réalisation particulier, le circuit de calcul comprend en outre un cœur de calcul vectoriel configuré pour mettre en œuvre des calculs sur des données vectorielles et comprenant une architecture en pipeline RISC-V.

Selon un mode de réalisation particulier, au moins l'un desdits un ou plusieurs circuits de mémoire est intégré dans le cœur de calcul vectoriel et configuré pour être utilisé en tant qu'unité fonctionnelle pour l'IMC d'un étage d'exécution du cœur de calcul vectoriel.

Selon un mode de réalisation particulier, l'interconnexion relie également le cœur de calcul vectoriel au TCM et au bus auquel la mémoire externe est reliée.

Selon un mode de réalisation particulier, le cœur de calcul vectoriel comprend un jeu d'instructions qui comporte des instructions de lecture de la mémoire vectorielle pour récupérer des données tensorielles qui constituent une matrice tridimensionnelle, à partir d'une mémoire externe vers au moins un fichier de registres vectoriels du cœur de calcul vectoriel, de sorte que les données tensorielles soient aplaties selon un ordre Z > Y > X, avec X, Y et Z correspondant aux trois axes de la matrice.

Selon un mode de réalisation particulier, le cœur de calcul comprend un jeu d'instructions qui comporte des instructions de manipulation de données configurées pour, pendant des première et deuxième convolutions successives de données tensorielles avec des données de noyau, décaler les données tensorielles stockées dans au moins un fichier de registres du cœur de calcul et utilisées pour la première convolution de sorte qu'une partie des données tensorielles communes aux première et deuxième convolutions soit conservée dans le fichier de registre.

Selon un mode de réalisation particulier, le cœur de calcul est configuré pour charger en parallèle, en un seul cycle, les données stockées dans plusieurs registres d'au moins un fichier de registres du cœur de calcul dans un emplacement d'au moins l'un desdits un ou plusieurs circuits de mémoire.

Selon un mode de réalisation particulier, le cœur de calcul comprend au moins un fichier de registres configuré pour stocker plusieurs sommes partielles résultant de convolutions mises en œuvre par le cœur de calcul.

Selon un mode de réalisation particulier, lesdits un ou plusieurs circuits de mémoire sont des circuits d'IMC numériques et/ou analogiques.

Selon un mode de réalisation particulier, le cœur de calcul comprend au moins un fichier de registres et au moins quatre étages comportant un étage d'extraction d'instructions, un étage de décodage d'instructions, un étage d'exécution et un étage de réécriture.

Un autre mode de réalisation prévoit un appareil correspondant à un microprocesseur ou à un microcontrôleur ou à un système sur puce, SoC, et comprenant au moins un circuit de calcul.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
- la figure 1 représente schématiquement un exemple d'un circuit de calcul selon un premier mode de réalisation ;
- la figure 2 représente schématiquement un exemple d'un circuit de calcul selon une variante du premier mode de réalisation ;
- la figure 3 représente schématiquement un exemple d'un circuit de calcul selon un deuxième mode de réalisation ;
- la figure 4 représente schématiquement un exemple d'un circuit de calcul selon une variante du deuxième mode de réalisation ;
- la figure 5 représente schématiquement un exemple d'un circuit de calcul selon un troisième mode de réalisation ;
- la figure 6 représente schématiquement un exemple d'un circuit de calcul selon un quatrième mode de réalisation ;
- la figure 7 représente schématiquement un exemple d'une opération mise en œuvre sur des données vectorielles par un circuit de calcul selon un mode de réalisation particulier ;
- la figure 8 représente schématiquement un exemple d'une organisation de données dans un fichier de registres vectoriels, mis en œuvre par un circuit de calcul selon un mode de réalisation particulier ;
- la figure 9 représente schématiquement un exemple d'une réorganisation de données dans un fichier de registres vectoriels mise en œuvre par un circuit de calcul selon un mode de réalisation particulier ;
- la figure 10 et la figure 11 représentent schématiquement des étapes mises en œuvre pendant une réorganisation de données dans un fichier de registres d'un circuit de calcul selon un mode de réalisation particulier ;
- la figure 12 représente schématiquement un exemple d'une récupération de données stockées dans plusieurs registres dans le(s) circuit(s) de mémoire IMC d'un circuit de calcul selon un mode de réalisation particulier ;
- la figure 13 représente schématiquement un exemple d'une stratégie de réécriture mise en œuvre par un circuit de calcul selon un mode de réalisation particulier ;
- la figure 14 représente schématiquement un exemple d'opérations mises en œuvre sur des données tensorielles avec des données de noyau partielles par le circuit de calcul 100 selon un mode de réalisation particulier ;
- la figure 15, la figure 16, la figure 17 et la figure 18 représentent schématiquement un exemple d'instructions mises en œuvre par un circuit de calcul selon un mode de réalisation particulier ;
- la figure 19 représente schématiquement des dimensions de données vectorielles utilisées pour le calcul de performances d'un circuit de calcul selon un mode de réalisation particulier ;
- la figure 20 et la figure 21 représentent schématiquement des performances calculées pour un circuit de calcul selon un mode de réalisation particulier ;
- la figure 22 représente schématiquement un appareil comprenant un circuit de calcul selon un mode de réalisation particulier.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, divers éléments (cœurs de calcul, mémoire, interconnexion, etc.) du circuit de calcul ne sont pas décrits en détail. Une personne du métier pourra mettre en œuvre, de façon détaillée, ces éléments sur la base de la description fonctionnelle fournie ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures dans une position normale d'utilisation.

Sauf précision contraire, les expressions "environ", "approximativement", "sensiblement", et "de l'ordre de" signifient à 10 % près, de préférence à 5 % près.

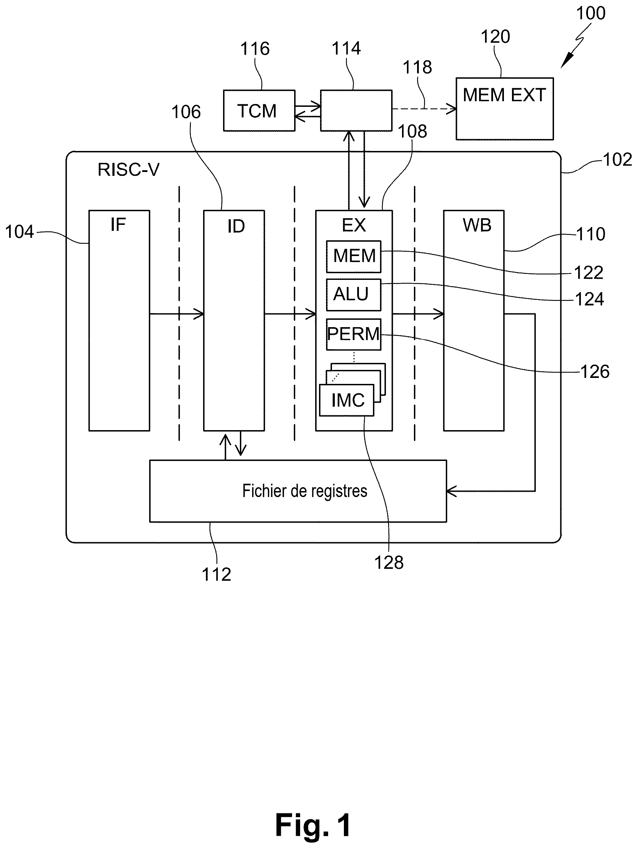

Un exemple de circuit de calcul 100 selon un premier mode de réalisation est décrit ci-dessous en relation avec la figure 1.

Le circuit de calcul 100 comprend au moins un cœur de calcul 102 basé sur une architecture en pipeline RISC-V. Le circuit de calcul 100 est donc configuré pour prendre en charge l'exécution d'un programme basé sur une architecture de jeu d'instructions, ISA, de type RISC-V.

Dans l'exemple représenté à la figure 1, le cœur de calcul 102 du circuit de calcul 100 comprend des circuits agencés selon quatre étages en pipeline, à savoir :
- un étage d'extraction d'instructions (IF) 104 configuré pour extraire des instructions d'une mémoire (non représentée en figure 1) et pour envoyer les instructions à un étage de décodage d'instructions (ID) 106 ;
- l'étage ID 106 configuré pour décoder des instructions extraites par l'étage IF 104, pour récupérer des données à partir d'au moins un fichier de registres 112 du cœur de calcul 102 et pour envoyer les données récupérées à un étage d'exécution (EX) 108 ;
- l'étage EX 108 configuré pour exécuter l' (les) opération(s) requise(s) par l'instruction (accès à la mémoire, opérations arithmétiques, permutation de données, etc.), et pour envoyer les données de résultat à un étage de réécriture (WB) 110 ;
- l'étage WB 110 configuré pour réécrire des données de résultat dans le(s) fichier(s) de registre 112.

A titre de variante, l'architecture en pipeline du cœur de calcul 102 peut comprendre un nombre d'étages différent de celui de l'exemple de la figure 1. De plus, il est également possible que le cœur de calcul 102 comprenne un ou plusieurs fichiers de registres.

Dans l'exemple de la figure 1, le circuit de calcul 100 comprend en outre une interconnexion 114, par exemple une interconnexion de type matricielle ou un autre type d'interconnexion, reliant le cœur de calcul 102 à au moins une mémoire à couplage étroitement couplé, TCM, 116 et à un bus 118 auquel est reliée une mémoire externe 120. Dans cette configuration, le cœur de calcul 102, et plus particulièrement l'étage EX 108, peut extraire des données de la mémoire externe 120 et envoyer des données à la mémoire externe 120 par l'intermédiaire de l'interconnexion 114. La mémoire 120 est appelée "mémoire externe" parce qu'elle est externe au cœur de calcul 102. Par exemple, la mémoire externe 120 correspond à un cache L1/L2, une SRAM (de l'anglais « Static Random-Access Memory », mémoire vive statique), une DRAM (de l'anglais « Dynamic Random-Access Memory », mémoire vive dynamique), etc.

Par rapport à la mémoire externe 120, la TCM 116 est directement relié à un port dédié du circuit en pipeline, c'est-à-dire le cœur de calcul 102, contrairement à la mémoire 120 qui est accessible par l'intermédiaire d'unités de chargement/stockage standard et une mémoire cache ou d'autres niveaux de hiérarchie.

Une mémoire cache est une mémoire commandée de façon transparente par la logique qui stocke des données temporaires auxquelles le processeur accède et qui peuvent être réutilisées plusieurs fois pour des raisons de localité temporelle ou de localité spatiale. Par rapport à une mémoire cache, la TCM 116 se comporte comme une mémoire normale. Par rapport à la mémoire externe 120, la TCM 116 est plus rapide d'accès et présente une latence plus faible du point de vue du cœur de calcul 102.

Dans l'exemple de la figure 1, en raison de sa nature étroitement couplée et par rapport à une mémoire standard, la TCM 116 permet d'accélérer l'accès à la mémoire du cœur de calcul 102 pour les données fréquemment consultées qui sont stockées dans la TCM 116. A titre de variante, le circuit de calcul 100 peut ne pas comprendre la TCM 116.

Dans un mode de réalisation particulier, un ou plusieurs des étages 104 à 110 du cœur de calcul 102 comprennent plusieurs sous-étages. Par exemple, dans le circuit de calcul 100 de la figure 1, l'étage EX 108 comprend plusieurs sous-étages formant chacun des unités fonctionnelles de l'étage. Dans l'exemple de la figure 1, l'étage EX 108 comprend un sous-étage de mémorisation, MEM, 122 configuré pour générer des requêtes d'accès à la mémoire (lecture/écriture) vers la mémoire externe 120, un sous-étage d'unité arithmétique et logique, ALU, 124 configuré pour effectuer des opérations requises sur des données (addition, multiplication, etc.), et un sous-étage de permutation, PERM, 126 pour effectuer des permutations sur les données.

Le circuit de calcul 100 comprend également un ou plusieurs circuits de mémoire 128 configurés pour mettre en œuvre un calcul en mémoire, IMC, ou calculer en mémoire, CIM. L'étage EX 108 est configuré pour utiliser les un ou plusieurs circuits de mémoire 128 pour mettre en œuvre l'IMC. Plus particulièrement, dans le premier mode de réalisation décrit ici, au moins un des circuits de mémoire 128 est intégré dans le cœur de calcul 102 et configuré pour être utilisé en tant qu'unité fonctionnelle pour l'IMC de l'étage EX 108 du cœur de calcul 102. Dans l'exemple de la figure 1, plusieurs circuits de mémoire 128 sont intégrés dans l'étage EX 108 en tant que plusieurs tuiles d'IMC. Le circuit de mémoire 128 peut être numérique (formant ainsi un calcul numérique en mémoire, DIMC) ou analogique (formant ainsi un calcul analogique en mémoire, AIMC).

Dans ce premier mode de réalisation, les circuits de mémoire pour l'IMC 128 sont intégrés dans le pipeline d'exécution RISC-V du cœur de calcul 102 en tant qu'unité fonctionnelle. En adoptant cette approche d'intégration, l'IMC est directement intégré dans le cœur de calcul 102, ce qui permet des opérations transparentes dans le cadre du flux d'exécution du cœur de calcul 102.

Dans l'architecture particulière du circuit de calcul 100, des instructions RISC-V personnalisées peuvent être introduites pour gérer le transfert de données, le calcul et le stockage des résultats. Par exemple, ces instructions incluent des opérations de chargement des caractéristiques d'entrée et des données de noyau de la mémoire externe 120 vers le(s) circuit(s) de mémoire IMC 128, le déclenchement de calculs de multiplication et accumulation, MAC, et la WB après le traitement.

Dans l'exemple de la figure 1, l'unité IMC ajoutée au cœur de calcul 102 comprend plusieurs blocs IMC, appelés tuiles IMC, correspondant à plusieurs circuits de mémoire pour l'IMC 128. Chaque tuile IMC peut être programmée en parallèle pour une exécution indépendante. A titre de variante, l'étage EX 108 du cœur de calcul 102 peut comprendre un seul circuit de mémoire pour l'IMC 128 formant un seul bloc IMC ou une seule tuile IMC.

A titre de variante, l'étage EX 108 du cœur de calcul 102 peut comprendre un nombre différent de sous-étages par rapport à l'exemple de la figure 1.

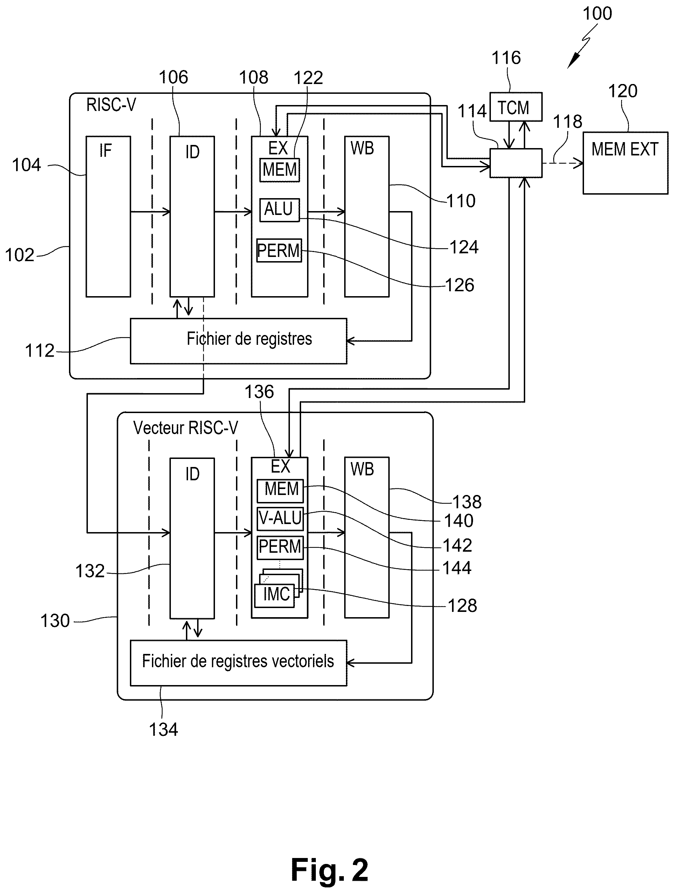

Un exemple de circuit de calcul 100 selon une variante du premier mode de réalisation est décrit ci-dessous en relation avec la figure 2.

Par rapport au circuit de calcul 100 décrit précédemment en relation avec la figure 1, le circuit de calcul 100 selon cette variante comprend en outre un cœur de calcul vectoriel 130 configuré pour mettre en œuvre des calculs sur des données vectorielles et comprenant, en tant que cœur de calcul 102, une architecture en pipeline RISC-V. Dans cette configuration, le jeu d'instructions RISC-V est encore étendu avec des instructions vectorielles pour traiter efficacement les calculs sur des données vectorielles. Dans cette configuration, le jeu d'instructions RISC-V est complété par des instructions vectorielles pour traiter efficacement les calculs sur les données vectorielles, ces instructions vectorielles étant exécutées par le cœur de calcul vectoriel 130. Cette extension vectorielle peut être conçue pour exploiter le parallélisme au niveau des données pour des charges de travail à haute performance. Dans le circuit de calcul 100 selon cette variante, le cœur de calcul 102 est configuré pour mettre en œuvre des calculs de données scalaires, et le cœur de calcul vectoriel 130 est configuré pour mettre en œuvre des calculs de données vectorielles.

Dans la configuration de la figure 2, le cœur de calcul vectoriel 130 reçoit, dans un étage ID 132, les instructions vectorielles provenant de l'étage ID 106 du cœur de calcul 102. Les instructions vectorielles sont initialement pré-décodées dans l'étage ID 106 du cœur de calcul 102. Le processus de décodage complet des instructions vectorielles est ensuite achevé dans l'étage ID 132 du cœur de calcul vectoriel 130. Le cœur de calcul vectoriel 130 comprend également au moins un fichier de registres vectoriels 134 relié à l'étage ID 132. Dans cet exemple, l'étage ID 132 est configuré pour décoder les instructions envoyées par l'étage ID 106 du cœur de calcul 102, pour récupérer des données à partir du fichier de registres vectoriels 134 et pour envoyer les données récupérées à un étage EX 136 du cœur de calcul vectoriel 130. L'étage EX 136 est ici configuré pour exécuter les instructions vectorielles requises par les instructions reçues sur les données vectorielles qui sont stockées/chargées depuis/dans le fichier de registres vectoriels 134. Le cœur de calcul vectoriel 130 comprend également un étage WB 138 configuré pour réécrire les données de résultat produites par l'étage EX 136 dans le fichier de registres vectoriels 134. Dans cet exemple, le cœur de calcul vectoriel 130 est donc configuré pour recevoir des instructions vectorielles en provenance du cœur de calcul 102 et pour exécuter les instructions vectorielles sur les données vectorielles stockées dans le fichier de registres vectoriels 134.

Dans un mode de réalisation particulier, un ou plusieurs des étages 132, 136, 138 du cœur de calcul vectoriel 130 comprennent plusieurs sous-étages. Par exemple, dans le circuit de calcul 100 de la figure 2, l'étage EX 136 comprend plusieurs sous-étages formant chacun des unités fonctionnelles de l'étage. Dans l'exemple de la figure 2, l'étage EX 136 comprend un sous-étage MEM 140 configuré pour générer des requêtes d'accès à la mémoire (lecture/écriture) à la mémoire externe 120, un sous-étage d'unité logique arithmétique vectorielle, V-ALU, 142 configuré pour effectuer des opérations requises sur des données vectorielles (addition, multiplication, etc.), et un sous-étage PERM 144 pour effectuer des permutations sur des données vectorielles.

Dans l'exemple de la figure 2, l'interconnexion 114 relie l'étage EX 108 du cœur de calcul 102 et l'étage EX 136 du cœur de calcul vectoriel 130 à la TCM 116 et au bus 118 auquel la mémoire externe 120 est reliée. Ainsi, dans cette variante, le cœur de calcul vectoriel 130 correspond à un coprocesseur vectoriel qui peut gérer indépendamment des accès mémoire à la TCM 116 et à la mémoire externe 120.

Dans cette variante, pour mieux exploiter les opérations de données vectorielles et les instructions vectorielles, le(s) circuit(s) de mémoire IMC 128 est(sont) directement intégré(s), ou incorporé(s), à l'intérieur du cœur de calcul vectoriel 130, c'est-à-dire à l'intérieur du pipeline de coprocesseur vectoriel RISC-V du circuit de calcul 100. Dans cette variante, le(s) circuit(s) de mémoire IMC 128 est(sont) configuré(s) pour être utilisé(s) comme unité(s) fonctionnelle(s) pour l'IMC de l'étage EX 136 du cœur de calcul vectoriel 130. Ainsi, le(s) circuit(s) de mémoire IMC 128 peu(ven)t bénéficier d'un fichier de registres vectoriels 134 plus important (par exemple 32x64 bits) qui est spécifiquement adapté aux données vectorielles longues, correspondant mieux aux opérations de données vectorielles exécutées dans les circuits de mémoire pour l'IMC 128, par exemple pendant une charge de travail ML. Pour soutenir pleinement cette mise en œuvre, l'ISA vectorielle RISC-V peut être étendue avec des instructions personnalisées pour traiter spécifiquement les opérations liées à l'IMC (chargement, stockage, exécution, démarrage, etc.).

Les différentes caractéristiques et variantes décrites précédemment pour le circuit de calcul 100 de la figure 1 peuvent s'appliquer au circuit de calcul 100 de la figure 2.

Dans l'exemple de la figure 2, le(s) circuit(s) de mémoire IMC 128 est(sont) intégré(s) uniquement dans le cœur de calcul vectoriel 130. Selon une variante non illustrée dans les figures, le circuit de calcul 100 peut comprendre le cœur de calcul 102 et le cœur de calcul vectoriel 130, et le(s) circuit(s) de mémoire IMC 128 peu(ven)t être intégré(s) dans le cœur de calcul 102, par exemple comme en figure 1, et dans le cœur de calcul vectoriel 130, par exemple comme en figure 2. Une telle configuration permet de maximiser la parallélisation de la charge de travail.

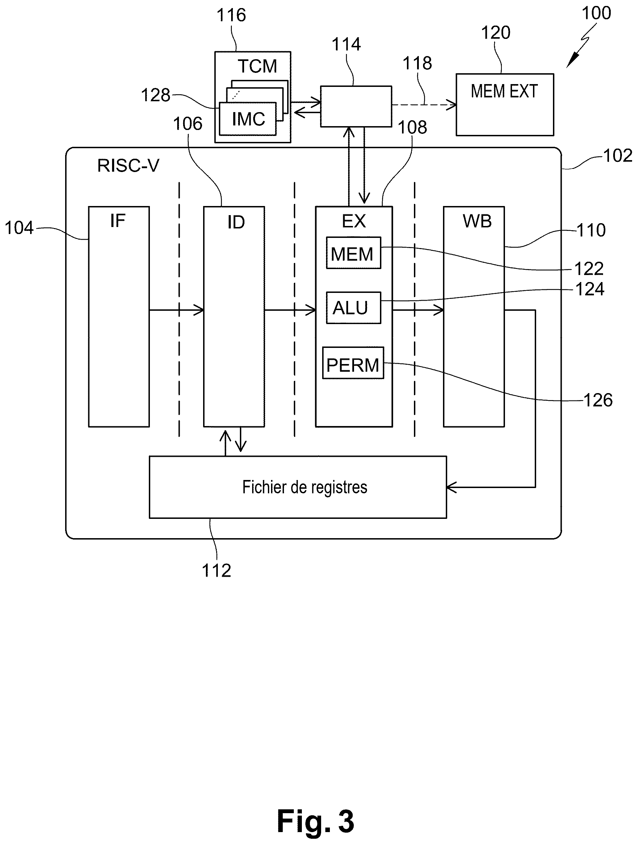

Un exemple de circuit de calcul 100 selon un deuxième mode de réalisation est décrit ci-dessous en relation avec la figure 3.

Dans l'exemple de la figure 3, le circuit de calcul 100 comprend les mêmes éléments que ceux du circuit de calcul 100 précédemment décrit en relation avec la figure 1, c'est-à-dire le cœur de calcul 102 comprenant les étages 104, 106, 108 et 110, le(s) fichier(s) de registres 112, l'interconnexion 114, le bus 118 et la mémoire externe 120. Dans la configuration de la figure 3, l'étage EX 108 du cœur de calcul 102 ne comprend pas le(s) circuit(s) de mémoire pour l'IMC 128 intégré(s) en tant qu'unité fonctionnelle. En effet, par rapport au premier mode de réalisation dans lequel au moins un circuit de mémoire pour l'IMC 128 est intégré dans le cœur de calcul 102 et/ou dans le cœur de calcul vectoriel 130 en tant qu'unité fonctionnelle, le circuit de calcul 100 comprend au moins un circuit de mémoire pour l'IMC 128 (plusieurs circuits de mémoire pour l'IMC 128 dans l'exemple de la figure 3) intégré en tant que TCM par l'intermédiaire de l'interconnexion 114. Ainsi, dans cette configuration, une unité IMC est directement connectée au circuit de calcul RISC-V en tant que TCM. Cette mise en œuvre permet de réduire la complexité de l'intégration de la conception car elle ne nécessite pas de modifier le pipeline d'exécution d'un cœur de calcul RISC-V.

Dans ce deuxième mode de réalisation, l'unité IMC, formée par les un ou plusieurs circuits de mémoire pour l'IMC 128, peut être directement accessible par le cœur de calcul 102 par l'intermédiaire d'une interface mémoire à large bande passante formée par l'interconnexion 114. Par ailleurs, dans cette configuration, les mémoires tampon de l'unité IMC peuvent servir de mémoire locale rapide pour le stockage des données intermédiaires, telles que des caractéristiques des données d'entrée, des poids du noyau ou des sommes partielles, ce qui permet de réduire la latence de la mémoire et d'améliorer l'efficacité de l'exécution. Enfin, cette approche permet de réutiliser les instructions de mémoire RISC-V existantes (car l'architecture du cœur de calcul 102 n'est pas modifiée par l'ajout de l'unité fonctionnelle pour l'IMC comme dans le premier mode de réalisation), ce qui simplifie la logique de commande et facilite la réutilisation efficace des données.

Par rapport au premier mode de réalisation dans lequel l'intégration de l'IMC en tant qu'unité fonctionnelle peut se concentrer sur l'exploitation d'instructions de calcul spécialisées pour l'accélération directe, l'intégration de l'IMC en tant que TCM minimise les goulets d'étranglement au niveau de l'accès à la mémoire en agissant en tant que stockage intermédiaire pour les données à forte demande pendant l'exécution. Cette approche peut offrir un avantage significatif dans sa compatibilité plus large avec différents cœurs de calcul, car elle nécessite moins d'adaptations aux architectures existantes. En intégrant l'IMC en tant que ressource de mémoire à large bande passante, l'intégration de la TCM peut être prise en charge de façon transparente avec les instructions de mémoire RISC-V existantes sans modifications importantes du jeu d'instructions ou du pipeline d'exécution. Cette flexibilité rend l'intégration de la TCM particulièrement attrayante pour les applications nécessitant une portabilité sur plusieurs conceptions de cœurs ou configurations de processeurs. De plus, l'intégration d'un circuit de mémoire pour l'IMC en tant que TCM permet d'obtenir une capacité d'accélération de calcul substantielle pour un faible coût. Enfin, cette configuration peut faciliter l'intégration dans des systèmes et des cœurs hétérogènes sans qu'il soit nécessaire de revoir la conception en profondeur, ce qui facilite l'adoption de la technologie IMC dans diverses plates-formes matérielles.

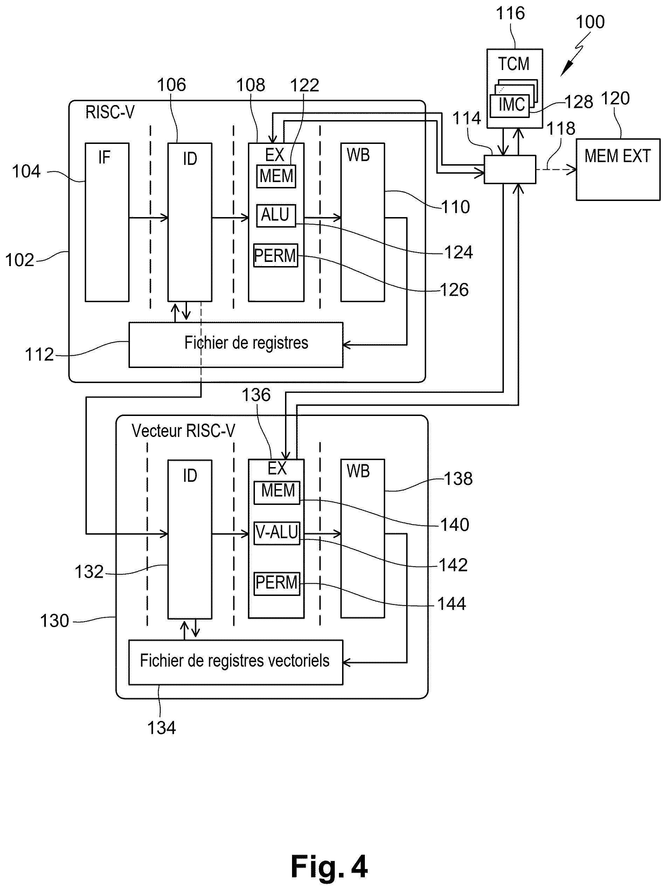

Un exemple de circuit de calcul 100 selon une variante du deuxième mode de réalisation est décrit ci-dessous en relation avec la figure 4.

Par rapport au circuit de calcul 100 précédemment décrit en relation avec la figure 3, le circuit de calcul 100 selon cette variante comprend en outre le cœur de calcul vectoriel 130 similaire à celui du circuit de calcul 100 précédemment décrit en relation avec la figure 2, sauf que l'étage EX 136 du cœur de calcul vectoriel 130 ne comprend pas le(s) circuit(s) de mémoire IMC 128 intégré(s) en tant qu'unité fonctionnelle. Comme dans l'exemple de la figure 2, l'interconnexion 114 relie également l'étage EX 136 du cœur de calcul vectoriel 130 aux circuits de mémoire pour l'IMC 128 intégrés en tant que TCM et au bus 118 auquel la mémoire externe 120 est reliée. Les circuits de mémoire pour l'IMC 128 sont ainsi accessibles au cœur de calcul 102 et au cœur de calcul vectoriel 130 pour améliorer les calculs effectués sur les données vectorielles. Dans cette solution, le cœur de calcul scalaire et le cœur de calcul vectoriel peuvent tous deux bénéficier de l'intégration de l'IMC en tant que TCM.

Les différentes caractéristiques et variantes décrites précédemment pour le circuit de calcul 100 de la figure 3 peuvent s'appliquer au circuit de calcul 100 de la figure 4.

Les différentes caractéristiques et variantes décrites précédemment pour le premier mode de réalisation peuvent s'appliquer au deuxième mode de réalisation.

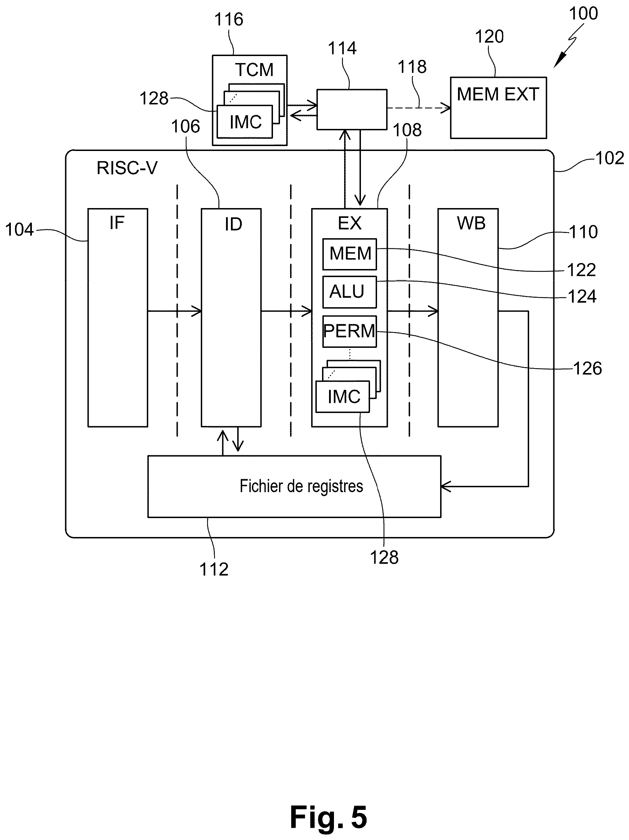

Les intégrations de l'IMC proposées dans les premier et deuxième modes de réalisation peuvent être mélangées, comme cela est représenté par le circuit de calcul 100 selon un troisième mode de réalisation décrit en relation avec la figure 5.

Dans l'exemple de la figure 5, le circuit de calcul 100 comprend les mêmes éléments que ceux du circuit de calcul 100 précédemment décrit en relation avec les figures 1 et 3, c'est-à-dire le cœur de calcul 102 comportant les étages 104, 106, 108, 110, le fichier de registres 112, l'interconnexion 114, le bus 118 et la mémoire externe 120. Toutefois, par rapport aux premier et deuxième modes de réalisation dans lesquels au moins un circuit de mémoire pour l'IMC 128 est intégré dans le cœur de calcul 102 et/ou dans le cœur de calcul vectoriel 130, ou en tant que TCM, au moins un circuit de mémoire pour l'IMC 128 est intégré dans le cœur de calcul 102, et au moins un autre circuit de mémoire pour l'IMC 128 est intégré en tant que TCM et interconnecté au cœur de calcul 102 par l'intermédiaire de l'interconnexion 114, ce qui offre un niveau élevé de flexibilité.

Dans ce troisième mode de réalisation, la combinaison des deux approches des premier et deuxième modes de réalisation (circuits de mémoire pour l'IMC 128 intégrés en tant qu'unité fonctionnelle dans le cœur de calcul et en tant que TCM) offre des avantages complémentaires : l'intégration de l'IMC en tant qu'unité fonctionnelle donne la priorité à l'accélération directe du calcul, tandis que l'intégration de l'IMC dans la TCM renforce l'évolutivité et l'adaptabilité du système. Ensemble, elles constituent une bonne solution pour améliorer les performances et l'efficacité énergétique, par exemple dans l'inférence des réseaux neuronaux basés sur la périphérie.

Selon une variante de ce troisième mode de réalisation, le circuit de calcul 100 peut comprendre le cœur de calcul vectoriel 130 tel que décrit précédemment pour les premier et deuxième modes de réalisation. Dans ce cas, les circuits de mémoire pour l'IMC 128 peuvent être intégrés :
- en tant qu'unité fonctionnelle dans le cœur de calcul 102, et en tant que TCM, ou
- en tant qu'unité fonctionnelle dans le cœur de calcul vectoriel 130, et en tant que TCM, ou
- en tant qu'unités fonctionnelles dans le cœur de calcul 102 et dans le cœur de calcul vectoriel 130, et en tant que TCM.

Les différentes caractéristiques et variantes décrites précédemment pour les premier et deuxième modes de réalisation peuvent s'appliquer au troisième mode de réalisation.

Dans les modes de réalisation précédents dans lesquels les circuits de mémoire pour l'IMC 128 sont intégrés en tant que TCM, les circuits 128 exécutent à la fois des fonctions de mémoire et de calcul. Le fonctionnement des circuits de mémoire pour l'IMC 128 en tant que dispositifs de calcul à partir du cœur de calcul 102 et/ou du cœur de calcul vectoriel 130 peut être réalisé grâce à une extension du jeu d'instructions du cœur de calcul 102 et/ou du cœur de calcul vectoriel 130.

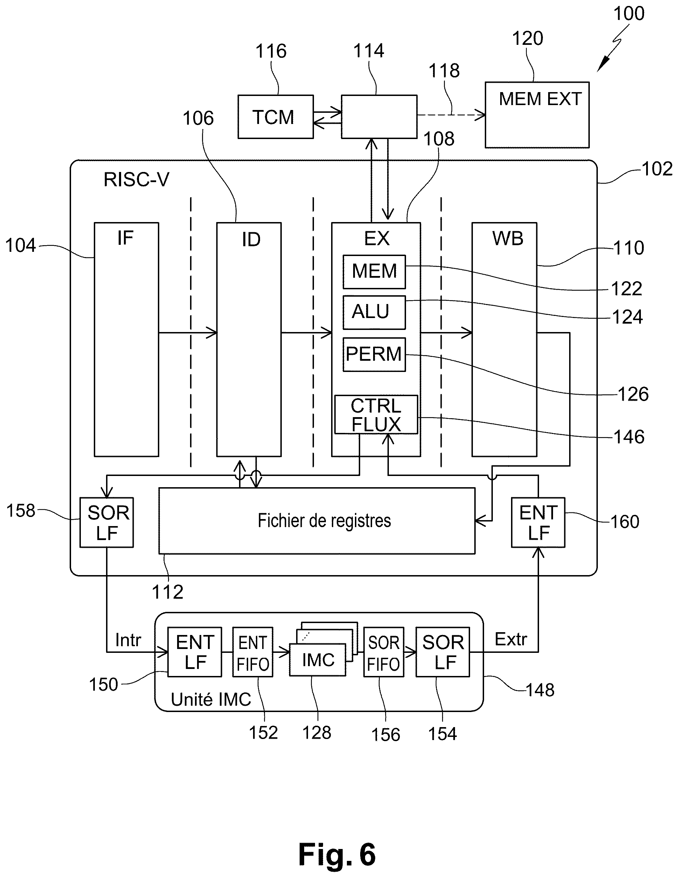

Un exemple de circuit de calcul 100 selon un quatrième mode de réalisation est décrit ci-dessous en relation avec la figure 6.

Dans l'exemple de la figure 6, le circuit de calcul 100 comprend les mêmes éléments que ceux du circuit de calcul 100 précédemment décrit en relation avec la figure 1, c'est-à-dire le cœur de calcul 102 comportant les étages 104, 106, 108, 110, le fichier de registres 112, l'interconnexion 114, la TCM 116, le bus 118 et la mémoire externe 120. Toutefois, dans ce quatrième mode de réalisation, l'étage EX 108 du cœur de calcul 102 n'intègre pas au moins un circuit de mémoire pour l'IMC 128. Dans ce quatrième mode de réalisation, l'étage EX 108 comprend au moins un contrôleur de flux 146, et au moins un circuit de mémoire pour l'IMC 128 est connecté au contrôleur de flux 146 par l'intermédiaire de liaisons de flux d'entrée et de sortie. Dans la configuration de la figure 6, au moins un circuit de mémoire pour l'IMC 128 appartient à une unité IMC 148 comprenant également une première interface d'entrée de liaison de flux 150, une première mémoire FIFO (de l'anglais « First In First Out », premier entrée, premier sortie) 152 reliée entre la première interface d'entrée de liaison de flux 150 et le(s) circuit(s) de mémoire IMC 128, une première interface de sortie de liaison de flux 154, et une deuxième mémoire FIFO 156 reliée entre la première interface de sortie de liaison de flux 154 et le(s) circuit(s) de mémoire pour l'IMC 128. Le contrôleur de flux 146 est relié à la première interface d'entrée de liaison de flux 150 au moyen d'une deuxième interface de sortie de liaison de flux 158 du cœur de calcul 102, et à la première interface de sortie de liaison de flux 154 au moyen d'une deuxième interface d'entrée de liaison de flux 160.

Ce quatrième mode de réalisation propose une autre stratégie d'intégration dans laquelle l'IMC fonctionne comme une unité externe au(x) cœur(s) de calcul, connectée au cœur de calcul RISC-V par l'intermédiaire d'une interface basée sur le flux. Dans cette configuration, le cœur de calcul 102 contient une nouvelle unité fonctionnelle dans l'étage EX 108, formée par le contrôleur de flux 146 configuré pour envoyer et recevoir des paquets de données à l'unité IMC externe 148. Dans ce mode de réalisation, l'unité IMC 148 reçoit des données par l'intermédiaire de la liaison de flux d'entrée. Les données sont collectées dans la première mémoire FIFO 152. L'au moins un circuit de mémoire pour l'IMC 128 est alimenté en données et en signaux de commande provenant de la première mémoire FIFO 152. Une fois le calcul IMC terminé, les données sont stockées dans la deuxième mémoire FIFO 156 avant d'être envoyées à l'étage EX 108 du cœur de calcul 102 au moyen de la liaison de flux de sortie.

Un avantage de cette intégration proposée dans ce quatrième mode de réalisation est que les exécutions du cœur de calcul RISC-V 102 et de l'unité IMC 148 sont disjointes l'une de l'autre. L'architecture RISC-V en pipeline n'est pas bloquée par l'exécution de l'IMC qui peut être mise en œuvre en parallèle parce que de nouvelles données sont poussées dans la première mémoire FIFO 152. Le calcul IMC est donc traité comme une file d'attente d'opérations. Le cœur de calcul RISC-V peut être programmé au moyen d'instructions personnalisées pour l'introduction de données dans le(s) circuit(s) de mémoire IMC 128. De façon similaire, des instructions personnalisées peuvent être utilisées pour extraire des données de l'unité IMC 148 lorsque les données sont prêtes. Cette mise en œuvre sépare totalement l'exécution RISC-V en pipeline de l'exécution de l'IMC, ce qui permet une exécution plus souple de la charge de travail.

Par exemple, cette solution est plus facile à mettre en œuvre qu'une intégration de l'IMC plus conventionnelle, basée sur l'adresse et à couplage lâche, qui nécessite un bus externe pour l'envoi de signaux de données/commande, et donc généralement plus de surface, d'énergie, et éventuellement des délais supplémentaires à cause de l'arbitrage du bus.

Par exemple, à titre de variante de ce quatrième mode de réalisation, le circuit de calcul 100 peut comprendre le cœur de calcul vectoriel 130. Dans ce cas, il est possible de relier une ou plusieurs unités IMC 148, par des liaisons de flux, à un ou plusieurs contrôleurs de flux 146 qui appartiennent à l'étage EX 108 du cœur de calcul 102 et/ou à l'étage EX 136 du cœur de calcul vectoriel 130. Il est également possible d'intégrer le(s) circuit(s) de mémoire IMC en tant qu'unité(s) fonctionnelle(s) dans le cœur de calcul 102 et/ou dans le cœur de calcul vectoriel 130 et/ou dans la TCM 116, tout en ayant une ou plusieurs unités IMC 148 connectées au cœur de calcul 102 et/ou au cœur de calcul vectoriel 130 par l'intermédiaire de liaisons de flux.

D'autres détails concernant la mise en œuvre des liaisons de flux et du contrôleur de flux 146 sont décrits dans le document US 2018/189424 A1.

Les différentes caractéristiques et variantes décrites précédemment pour les premier, deuxième et troisième modes de réalisation peuvent s'appliquer au quatrième mode de réalisation.

Dans les différents modes de réalisation et variantes, le circuit de calcul 100 peut comprendre d'autres éléments, tels qu'un (des) registre(s), unité(s) de commande, etc. qui ne sont pas décrits ici.

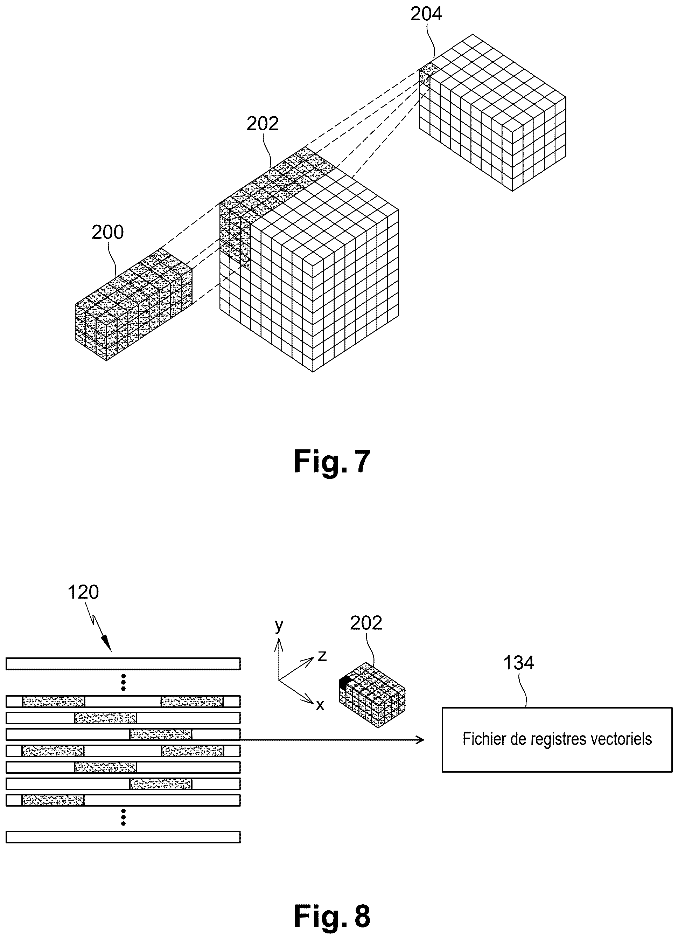

La figure 7 représente schématiquement un exemple de calcul, ou traitement, effectué par le circuit de calcul 100. Ce calcul correspond à une convolution entre des données de noyau 200 et des données tensorielles, ou données de caractéristiques, 202. La référence 204 désigne les données de résultat obtenues par la mise en œuvre de cette convolution. Dans cet exemple, les données de noyau 200, les données tensorielles 202 et les données de résultat 204 correspondent à des vecteurs.

Dans tous les modes de réalisation et variantes du circuit de calcul 100, le calcul IMC commence lorsque les données de noyau 200 et les données tensorielles 202 sont toutes deux chargées dans le(s) circuit(s) de mémoire IMC 128. Les données de noyau et du tenseur se trouvent généralement dans une mémoire externe, et il est nécessaire de tenir compte du temps nécessaire pour déplacer les données dans le(s) circuit(s) de mémoire pour l'IMC 128.

Pour maximiser le débit de calcul de l'IMC, une ou plusieurs stratégies efficaces d'extraction et de stockage des données peuvent être mises en œuvre par le circuit de calcul 100.

Dans un mode de réalisation particulier, une première stratégie d'extraction et de stockage des données consiste à mettre en œuvre une organisation efficace des données pour un chargement IMC optimisé des données tensorielles depuis une mémoire externe vers le fichier de registres vectoriels 134, ou vers le fichier de registres 112 pour les modes de réalisation des figures 1, 3, 5 et 6. Dans un mode de réalisation particulier, le cœur de calcul vectoriel 130 comprend un jeu d'instructions qui inclut des instructions de lecture de la mémoire vectorielle pour récupérer des données tensorielles, qui forment une matrice tridimensionnelle, depuis la mémoire externe 120 au fichier de registres vectoriels 134 du cœur de calcul vectoriel 130, de sorte que les données tensorielles soient aplaties selon un ordre Z > Y > X, où X, Y et Z correspondent aux trois axes de la matrice.

La figure 8 représente un exemple d'organisation des données mise en œuvre avec une extraction des données tensorielles de la mémoire externe 120 et un stockage de ces données dans le fichier de registres vectoriels 134. Dans cet exemple, les données provenant de la mémoire externe 120 sont récupérées et stockées dans le fichier de registres vectoriels 134 dans un ordre spécifique afin de rationaliser à la fois le chargement dans le(s) circuit(s) de mémoire pour l'IMC 128 et la réorganisation des données après chaque étape de glissement de la fenêtre de convolution. Dans un mode de réalisation particulier, cette stratégie de récupération des données optimisée peut être mise en œuvre en utilisant des instructions de lecture de la mémoire vectorielle RISC-V spécialisées qui permettent une récupération irrégulière des données. Dans l'exemple de la figure 8, les données tensorielles sont aplaties dans l'ordre des dimensions Z > Y > X. Cette approche simplifie la manipulation des données et favorise une réutilisation efficace des données par le circuit de calcul 100.

Dans un mode de réalisation particulier, une deuxième stratégie d'extraction et de stockage de données visant à maximiser le débit de calcul de l'IMC consiste à minimiser le nombre de transactions d'extraction de données RISC-V requises pour une convolution donnée au moyen d'une stratégie de manipulation de données dans le fichier de registres vectoriels 134, ou dans le fichier de registres 112 pour les modes de réalisation des figures 1, 3, 5 et 6. Dans un mode de réalisation particulier, le cœur de calcul vectoriel 130 comprend un jeu d'instructions qui inclut des instructions de manipulation de données configurées pour, pendant des première et deuxième convolutions successives de données tensorielles avec des données de noyau, décaler les données tensorielles stockées dans le fichier de registres vectoriels 134 et utilisées pour la première convolution de sorte qu'une partie de ces données tensorielles communes aux première et deuxième convolutions soit conservée dans le fichier de registres vectoriels 134. Ces manipulations de données peuvent également être appliquées aux données stockées dans le fichier de registres 112.

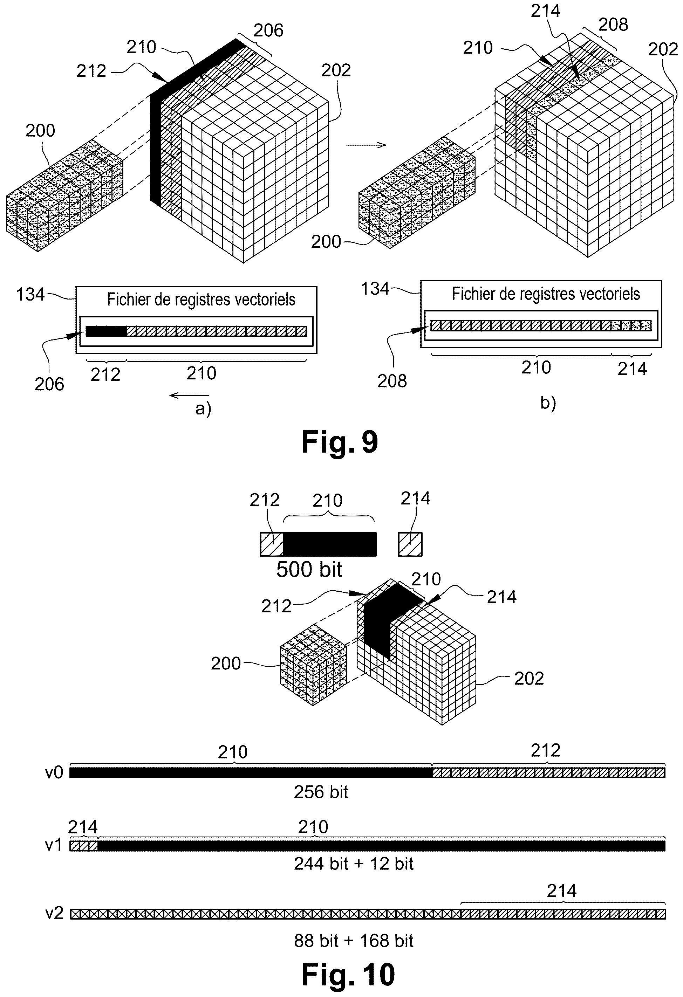

La figure 9 représente un exemple de réorganisation des données mise en œuvre dans le fichier de registres vectoriels 134 pendant deux convolutions successives des données de noyau 200 avec les données tensorielles 202. Dans cette figure, une première convolution est mise en œuvre entre les données de noyau 200 et une première partie 206 des données tensorielles 202 (situation a) de la figure 9), puis une deuxième convolution est mise en œuvre entre les données de noyau 200 et une deuxième partie 208 des données tensorielles 202 (situation b) de la figure 9). La référence 210 désigne la partie des données tensorielles qui est utilisée pour la première et la deuxième convolution, la référence 212 désigne la partie des données tensorielles 202 qui est utilisée pour la première convolution mais pas pour la deuxième convolution, et la référence 214 désigne la partie des données tensorielles 202 qui est utilisée pour la deuxième convolution mais pas pour la première convolution. Afin de réduire la quantité de données à écrire dans le fichier de registres vectoriels 134, des instructions de manipulation de données spécifiques sont mises en œuvre pour décaler les données tensorielles stockées dans le fichier de registres vectoriels 134 de sorte que, à la fin de la manipulation de données, la partie des données tensorielles 202 qui est utilisée pour la première convolution mais qui n'est pas utilisée pour la deuxième convolution est supprimée du fichier de registres vectoriels 134, et la partie des données tensorielles qui est utilisée pour la deuxième convolution mais qui n'est pas utilisée pour la première convolution est ajoutée dans le fichier de registres vectoriels 134. La flèche représentée sous le fichier de registres vectoriels 134 de la situation a) de la figure 9 illustre le sens du décalage des données mis en œuvre dans le fichier de registres vectoriels 134.

Cette réorganisation des données permet d'optimiser la réutilisation des données dans le fichier de registres vectoriels 134 pendant des convolutions successives. Cette technique permet de limiter le nombre d'instructions d'extraction de la mémoire externe et réduit le temps de chargement de l'IMC et le temps d'exécution global des convolutions.

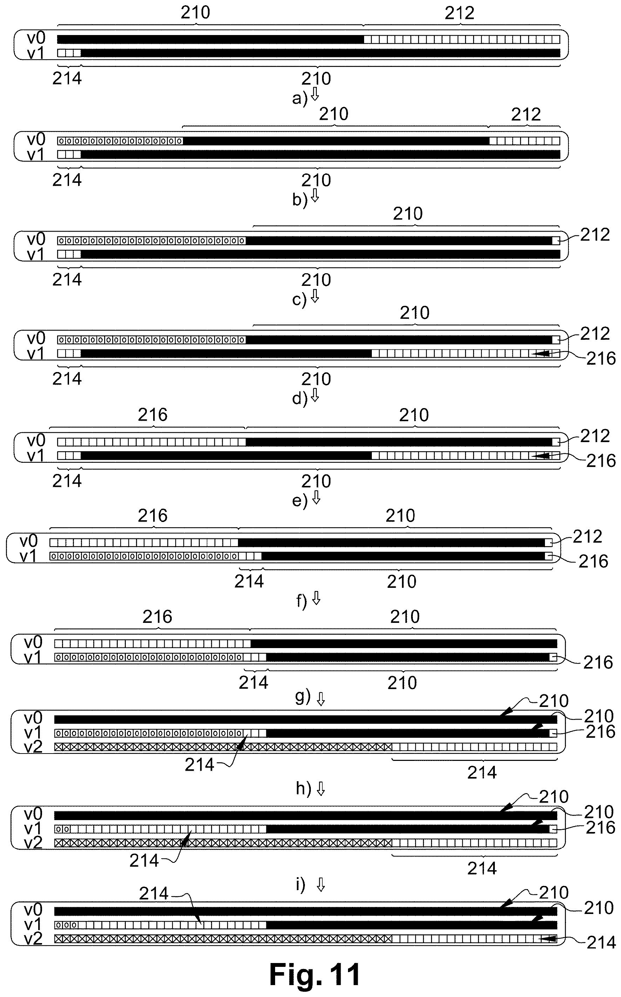

Les figures 10 et 11 représentent un autre exemple de réorganisation des données mise en œuvre pendant des première et deuxième convolutions successives des données tensorielles 202 avec les données de noyau 200 pour réutiliser les données déjà stockées dans le fichier de registres vectoriels 134. La figure 10 représente la première convolution qui est mise en œuvre entre les données de noyau 200 et la partie 206 des données tensorielles 202, la deuxième convolution étant destinée à être mise en œuvre entre les données de noyau 200 et la partie 208 des données tensorielles 202. La référence 210 désigne la partie des données tensorielles qui est utilisée à la fois dans la première et la deuxième convolution. La figure 10 représente trois vecteurs v0, v1 et v2 du fichier de registres vectoriels 134 dans lequel sont stockées les parties 206 et 208 des données tensorielles 202. Dans l'état initial représenté en figure 10, chaque vecteur v0, v1 et v2 stocke 256 bits.

La figure 11 représente les différentes opérations mises en œuvre pour déplacer les données stockées dans les vecteurs v0, v1 et v2, entre les première et deuxième convolutions.

Une première opération a) correspond à un décalage vers la droite de 64 bits mis en œuvre dans le vecteur v0.

Une opération suivante b) correspond à un décalage vers la droite de 32 bits mis en œuvre dans le vecteur v0.

Une opération suivante c) correspond à une mise en évidence des données à déplacer de v1 à v0. Dans cet exemple, le nombre de bits à déplacer de v1 à v0 correspond au nombre de bits précédemment décalés dans v0 (96 bits dans cet exemple). Les données mises en évidence sont désignées par la référence 216.

Pendant une opération suivante d), les données précédemment mises en évidence 216 sont copiées dans v0.

Pendant une opération suivante e), un décalage vers la droite de 96 bits est mis en œuvre dans v1.

Pendant une opération suivante f), un décalage vers la droite de 4 bits est mis en œuvre dans v0.

Pendant une opération suivante g), les données précédemment mises en évidence 216 sont supprimées.

Pendant une opération suivante h), les données (96 bits) sont copiées de v2 à v1.

Pendant une opération suivante i), un décalage vers la droite de 4 bits est mis en œuvre dans v1.

Dans un mode de réalisation particulier, une troisième stratégie d'extraction et de stockage des données pour maximiser le débit de calcul de l'IMC consiste à réduire les cycles de chargement de l'IMC en optimisant l'extraction des données à partir du fichier de registres vectoriels 134, ou du fichier de registres 112 pour les modes de réalisation des figures 1, 3, 5 et 6, en exploitant les lectures à plusieurs lignes pour le chargement de l'IMC en un seul cycle. Dans un mode de réalisation particulier, le cœur de calcul vectoriel 130 est configuré pour charger en parallèle, en un seul cycle, des données stockées dans plusieurs registres du fichier de registres vectoriels 132 dans un emplacement du (des) circuit(s) de mémoire pour l'IMC 128. En fonction de la taille de l'entrée IMC et de la longueur des vecteurs, différents types de chargements de données peuvent être nécessaires. Cette stratégie peut également être appliquée à des données stockées dans le fichier de registres 112. La flexibilité de l'architecture RISC-V permet de charger plusieurs registres de vecteurs, ce qui permet de maximiser le débit. Plus précisément, plusieurs registres du fichier de registres vectoriels 134 peuvent être chargés en parallèle pour optimiser le chargement des lignes de l'IMC. Cette approche permet de charger jusqu'à 256 bits de données vectorielles dans un emplacement de l'IMC en un seul cycle (en considérant un fichier de registres vectoriels 134 de 32x64 bits). Par exemple, les données stockées dans quatre vecteurs du fichier de registres vectoriels 134 peuvent être chargées en parallèle, en un seul cycle, dans le(s) circuit(s) de mémoire IMC 128.

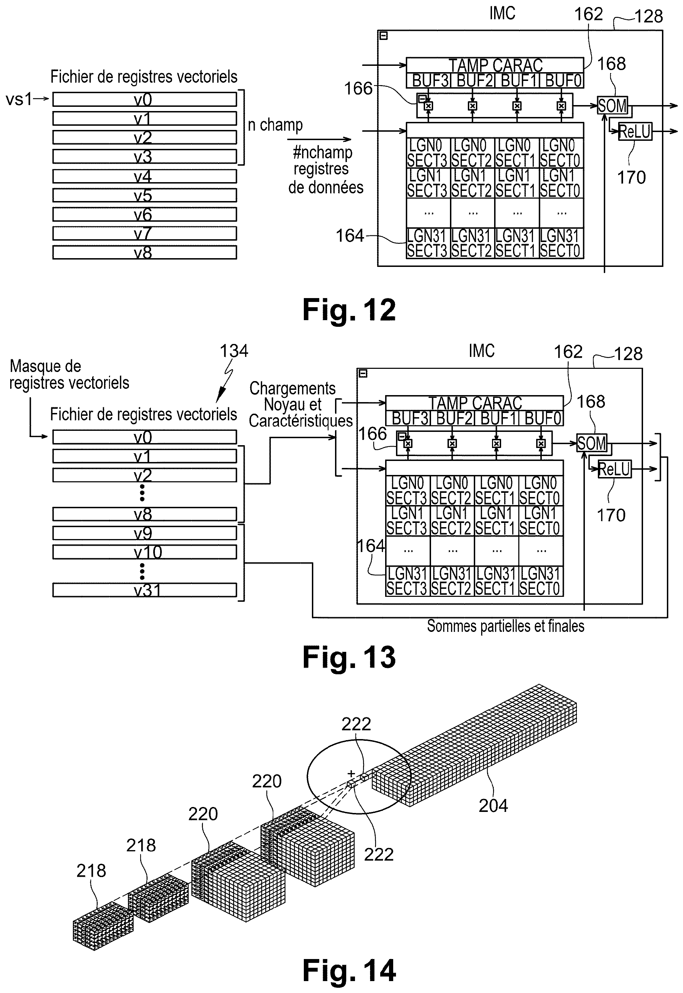

La figure 12 représente un exemple d'extraction de données stockées dans plusieurs registres du fichier de registres vectoriels 134 dans le(s) circuit(s) de mémoire pour l'IMC 128. Dans cette figure, le circuit de mémoire pour l'IMC 128 comprend une mémoire tampon de caractéristique ou de tenseur 162 configurée pour stocker les données de caractéristiques ou tensorielles. Le circuit de mémoire pour l'IMC 128 comprend également une mémoire de noyau 164 configurée pour stocker les données de noyau. Le circuit de mémoire pour l'IMC 128 comprend également des éléments de calcul 166 configurés pour calculer les opérations requises pour les convolutions entre les données de caractéristiques et les données de noyau, un dispositif de sommation 168 pour additionner les sommes partielles obtenues à la sortie des éléments de calcul, et un élément 170 pour fournir en sortie la somme finale obtenue par l'addition des sommes partielles.

Dans un mode de réalisation particulier, une quatrième stratégie d'extraction et de stockage des données pour maximiser le débit de calcul de l'IMC consiste à exploiter pleinement l'espace mémoire du fichier de registres dans le contexte de convolutions par lots grâce à une utilisation efficace du fichier de registres pour le stockage des sommes partielles pendant une opération de réécriture. Dans un mode de réalisation particulier, le cœur de calcul vectoriel 130 comprend au moins un fichier de registres vectoriels 134 configuré pour stocker plusieurs sommes partielles résultant de convolutions mises en œuvre par le cœur de calcul vectoriel 130. Cette stratégie peut également être appliquée au fichier de registres 112.

La figure 13 représente schématiquement un exemple d'une telle stratégie de réécriture, qui permet de stocker plusieurs sommes partielles dans le fichier de registres vectoriels 132 avant de les écrire dans la mémoire externe 120. Cette approche permet de réutiliser directement les sommes partielles du fichier de registres vectoriels 134, à condition que la taille du lot le permette, ce qui élimine la nécessité de les récupérer dans la mémoire externe 120.

Le stockage local des sommes partielles joue un rôle dans l'accélération de l'exécution des convolutions qui nécessitent une mise en lot. En effet, en stockant les sommes partielles localement, le circuit de calcul 100 réduit considérablement la nécessité d'accéder à la mémoire externe 120 pour récupérer les sommes partielles entre des convolutions par lots successives. Cette stratégie permet non seulement de minimiser la latence de la mémoire, mais aussi d'améliorer l'efficacité globale, car l'accès fréquent à la mémoire externe peut introduire des retards et augmenter la consommation d'énergie.

Pour calculer les sommes partielles, les données de noyau 200 peuvent être séparées en au moins deux données partielles de noyau 218. Les résultats de calcul obtenus lorsque ces données partielles de noyau 218 correspondent aux sommes partielles qui sont ensuite ajoutées l'une à l'autre pour obtenir la somme finale.

La figure 14 représente schématiquement un exemple d'opérations mises en œuvre sur des données tensorielles avec des données partielles de noyau 218 par le circuit de calcul 100 selon un mode de réalisation particulier. Dans cette figure, les données partielles de noyau sont désignées par la référence 218. Dans cet exemple, les données tensorielles sont également séparées en plusieurs blocs référencés 220. La référence 222 désigne les sommes partielles qui sont obtenues, ces sommes partielles étant additionnées pour obtenir les données de résultat 204.

Une ou plusieurs des différentes stratégies de récupération et d'organisation décrites ci-dessus peuvent être mises en œuvre par le circuit de calcul, et par exemple combinées l'une à l'autre pour améliorer les performances du circuit de calcul 100.

Dans les différents modes de réalisation et variantes du circuit de calcul 100, de nouvelles instructions personnalisées peuvent être introduites pour gérer des mouvements de données et des signaux de commande depuis/vers le(s) circuit(s) de mémoire pour l'IMC 128.

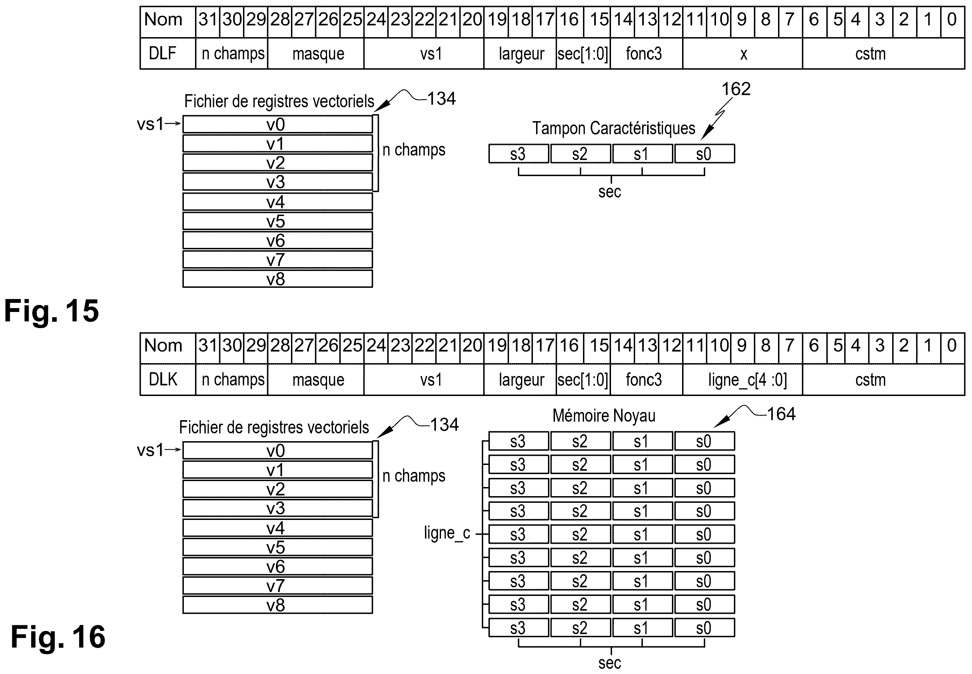

Par exemple, parmi ces nouvelles instructions personnalisées, les nouvelles instructions de chargement correspondent à :
- DLF : charge les données de caractéristiques 202 dans la mémoire tampon de caractéristiques 162 (voir la figure 15 qui représente un exemple de champs de cette instruction et la relation de ces champs avec la structure du fichier de registres vectoriels 134 et de la mémoire tampon de caractéristiques 162) ;
- DLK : charge les données de noyau 200 dans la mémoire de noyau 164 (voir la figure 16 qui représente un exemple de champs de cette instruction et la relation de ces champs avec la structure du fichier de registres vectoriels 134 et de la mémoire de noyau 164).

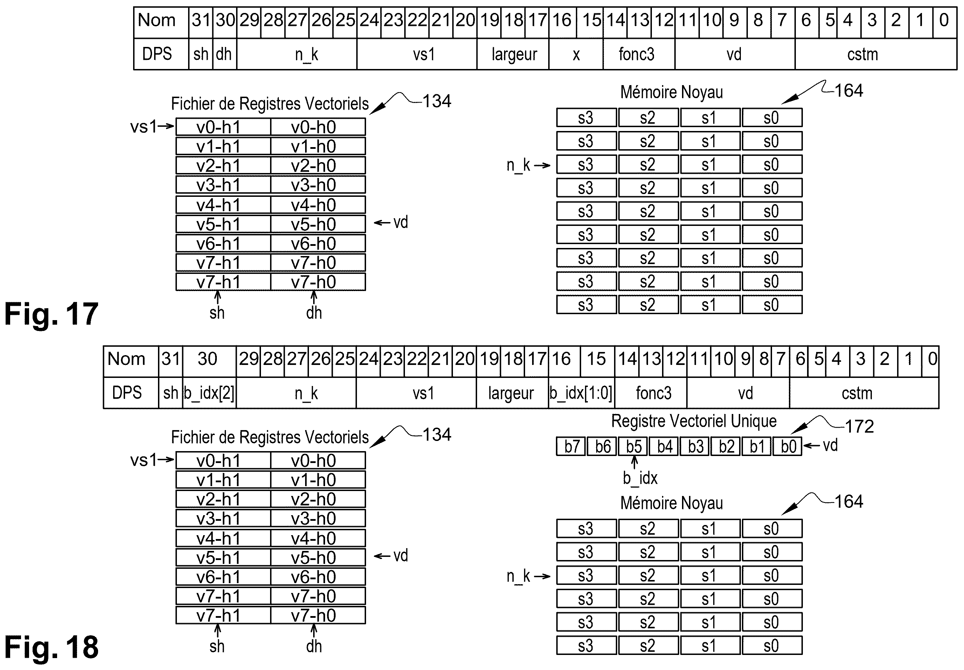

De plus, parmi ces nouvelles instructions personnalisées, de nouvelles instructions de calcul et de stockage peuvent correspondre à :
- DPS : lance le calcul et stocke la somme partielle (voir la figure 17 qui représente un exemple de champs de cette instruction et la relation de ces champs avec la structure du fichier de registres vectoriels 134 et de la mémoire de noyau 164) ;
- DSS : lance le calcul et stocke la somme finale (voir la figure 18 qui représente un exemple de champs de cette instruction et la relation de ces champs avec la structure du fichier de registres vectoriels 134, de la mémoire de noyau 164 et d'un registre vectoriel unique 172).

Les performances d'un circuit de calcul 100 dérivé du circuit de calcul 100 décrit précédemment et représenté en figure 2 sont calculées et comparées à celles d'un circuit de calcul 10 comprenant tous les éléments de ce circuit de calcul 100 à l'exception du circuit de mémoire pour l'IMC 128.

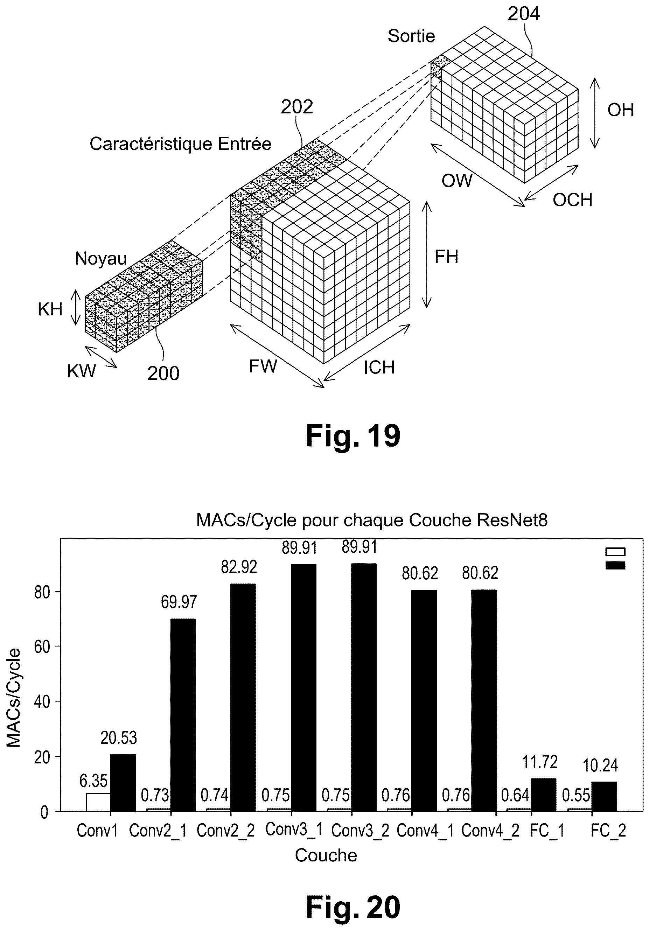

Pour le calcul de ces performances, des convolutions entre les données de noyau 200 et les données tensorielles 202 sont effectuées à l'adresse. Les dimensions de ces données, telles que représentées dans la figure 19, sont prises en compte pour le calcul des performances.

Les indicateurs de performance calculés sont :
$Speedup = ClockCyclesCircuit 10 / ClockCyclesCircuit 100 ;$
dans lequel *ClockCyclesCircuit10* correspond au nombre de cycles d'horloge utilisés par le circuit de calcul 10, et *ClockCyclesCircuit100* correspond au nombre de cycles d'horloge utilisés par le circuit de calcul 100.

Les indicateurs de charge de travail de convolution qui sont calculés sont :
${MAC}_{tot} = KH * KW * ICH * OH * OW * OCH$
${MAC}_{path} = KH * KW * ICH * OCH$
${MAC}_{SingleKernelPatch} = KH * KW * ICH$
dans lequel *KH* et *KW* sont des dimensions des données de noyau 200, *ICH* est une dimension des données de caractéristiques 202, et *OH, OW* et *OCH* sont des dimensions des données de résultats 204.

L'indicateur de la charge de travail calculée est :
$MACs / Cycle = {MAC}_{tot} / ClockCycles .$

La figure 20 représente les performances *MACs*/*Cycle* obtenues dans chaque couche du réseau neuronal ResNet8 calculées avec le circuit de calcul 10 (résultats illustrés en gris) et avec le circuit de calcul 100 (résultats illustrés en noir). Ces performances montrent que, grâce à l'ajout du circuit de mémoire pour l'IMC 128, l'accélération totale du réseau est égale à 108, et l'accélération moyenne des couches est égale à 77.

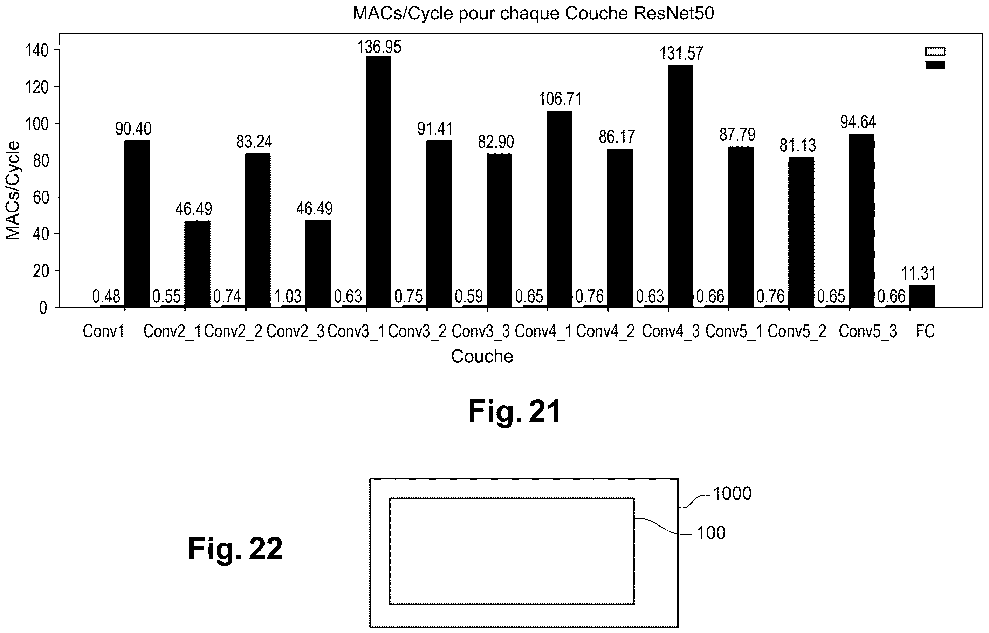

La figure 21 représente les performances *MACs*/*Cycle* obtenues dans chaque couche du réseau neuronal ResNet50 calculées avec le circuit de calcul 10 (résultats illustrés en gris) et avec le circuit de calcul 100 (résultats illustrés en noir). Ces performances montrent que, grâce à l'ajout du circuit de mémoire pour l'IMC 128, l'accélération totale du réseau est égale à 123, et l'accélération moyenne des couches est égale à 128.

On propose donc un circuit de calcul 100, ou un système, comprenant au moins un cœur de calcul, au moins un circuit de mémoire configuré pour mettre en œuvre l'IMC, et dans lequel le cœur de calcul comprend un circuit de décodage pour décoder une pluralité d'instructions dans un pipeline d'exécution.

Pour prendre en charge l'intégration de l'IMC dans les modes de réalisation proposés, une extension de l'architecture de jeu d'instructions (ISA) RISC-V du circuit de calcul 100 est proposée. Cette intégration peut s'appuyer sur des extensions de l'ISA personnalisées conçues pour l'IMC, en optimisant sa fonctionnalité par exemple pour accélérer des tâches d'apprentissage en profondeur tout en minimisant la surcharge des transferts de données.

Le circuit de calcul 100 proposé représente un choix stratégique pour maximiser l'efficacité énergétique, réduire le temps de traitement et permettre l'exécution en temps réel de charges de travail d'IA sur des systèmes embarqués.

Pour exploiter efficacement l'IMC et accélérer efficacement la charge de travail cible, le circuit de calcul 100 peut étendre l'ISA RISC-V pour prendre en charge le fonctionnement de l'IMC, repenser l'architecture vectorielle et définir des stratégies efficaces de mappage des données.

Dans le circuit de calcul 100, l'IMC offre un changement de paradigme en intégrant les capacités de calcul directement dans des matrices mémoire. Contrairement aux architectures conventionnelles qui séparent le calcul et le stockage des données, l'IMC exécute des opérations telles que les multiplications et les additions dans la mémoire elle-même. Cette approche minimise le mouvement des données, ce qui conduit à une réduction significative de la latence et de la consommation d'énergie, en rendant transparent le traitement des tâches à forte intensité matricielle comme celles que l'on trouve par exemple dans les réseaux neuronaux à convolution, CNN.

L'architecture RISC-V du circuit de calcul 100, grâce à son ISA extensible, permet la mise en œuvre transparente d'extensions spécifiques à l'application, ce qui permet des conceptions matérielles adaptées à des charges de travail de calcul spécifiques.

Le circuit de calcul 100 permet d'exploiter l'architecture modulaire et libre du microprocesseur RISC-V pour l'intégration de l'accélérateur de l'IMC.

L'ISA du RISC-V fournit un cadre idéal pour le traitement parallèle des données, améliorant considérablement les performances de l'IMC en optimisant l'exécution des opérations vectorisées dans les tâches d'apprentissage en profondeur.

Le circuit de calcul proposé 100 permet :
- une manipulation améliorée des données : mappage efficace des caractéristiques d'entrée et des données des noyaux dans la mémoire pour réduire des frais généraux de transfert de données et optimiser l'utilisation RF ;
- la définition d'instructions personnalisées : introduction d'instructions personnalisées adaptées aux opérations de l'IMC pour simplifier la logique de commande et d'améliorer le débit d'exécution ;
- le traitement à large bande passante : utilisation de mémoires tampon pour l'IMC de 1024 bits et d'opérations vectorisées pour exploiter le parallélisme dans les tâches de convolution, en réduisant la latence de la mémoire et en maximisant les bandes passantes de la mémoire.

Le circuit de calcul 100 permet l'intégration de l'IMC dans un processeur RISC-V pour améliorer l'efficacité de calcul, en particulier pour les applications d'apprentissage en profondeur sur les dispositifs de calcul en périphérie. La solution proposée relève le défi d'équilibrer la consommation d'énergie, la latence et les contraintes de surface tout en accélérant les opérations convolutives essentielles pour les réseaux neuronaux.

Dans certains modes de réalisation, l'intégration de l'IMC en tant qu'unité fonctionnelle dans le cœur de calcul accélère les calculs en utilisant des instructions spécialisées, tandis que l'intégration de l'IMC dans le modèle à TCM minimise les goulets d'étranglement au niveau de l'accès à la mémoire et permet une plus grande compatibilité avec d'autres cœurs en raison d'un nombre réduit de personnalisations architecturales. Dans certains modes de réalisation, l'approche basée sur les flux offre un autre ensemble d'avantages par rapport aux autres stratégies d'intégration : en exploitant les flux de données, le RISC-V et l'IMC peuvent fonctionner de façon totalement disjointe. L'IMC ne traite les données que lorsqu'elles sont disponibles à son entrée. Le RISC-V récupère automatiquement les résultats lorsque les données sont prêtes.

Chacune de ces solutions améliore les performances et l'efficacité énergétique, en offrant différents compromis en termes de PPA (puissance, performances et surface), d'effort de stratégie d'intégration et de débit de calcul global. Toutes ces solutions représentent des options évolutives et flexibles pour l'inférence de réseaux neuronaux basés sur la périphérie, par exemple.

Par ailleurs, le circuit de calcul 100 permet un ensemble de stratégies de mappage de données efficaces pour optimiser le chargement et le stockage de données dans et depuis l'IMC, en minimisant le nombre d'accès à la mémoire externe par l'exploitation du fichier de registres RISC-V ou du fichier de registres vectoriels.

La figure 22 représente un appareil 1000 qui comporte le circuit de calcul 100. Par exemple, l'appareil 1000 correspond à un microprocesseur (CPU ou MPU) ou à un microcontrôleur (MCU) ou à un système sur puce (SoC).

Le circuit de calcul 100 peut être utilisé par exemple pour des applications de réseaux neuronaux, par exemple pour le traitement audio, vidéo, d'images ou de signaux, les réseaux neuronaux artificiels (ANN), les réseaux neuronaux convolutifs (CNN), les réseaux neuronaux profonds (DNN), et peut constituer un accélérateur à CNN. Le circuit de calcul 100 peut être utilisé pour mettre en œuvre la multiplication matricielle et vectorielle (MVM).

Le circuit de calcul 100 peut être incorporé dans un accélérateur d'IA ou une NPU (de l'anglais « Neural Processing Unit », unité de traitement neuronal).

Le circuit de calcul 100 peut être utilisé dans un dispositif de calcul périphérique et permet d'avoir un système intégré économe en énergie.

Il est également décrit un support non transitoire lisible par ordinateur sur lequel sont stockées des instructions, qui, si elles sont exécutées par un ou plusieurs circuits de calcul, amènent les un ou plusieurs circuits de calcul à effectuer des calculs dans lequel un étage d'exécution est configurée pour utiliser lesdits un ou plusieurs circuits de mémoire mis en œuvre en tant qu'IMC. Toutes les caractéristiques précédemment décrites du circuit de calcul 100 peuvent s'appliquer à ce support non transitoire lisible par ordinateur.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Circuit de calcul (100) comprenant :
- au moins un cœur de calcul (102, 130) basé sur une architecture en pipeline à ordinateur à jeu d'instructions réduit, RISC-V ;
- un ou plusieurs circuits de mémoire (128) configurés pour mettre en œuvre un calcul en mémoire, IMC ;
et dans lequel le cœur de calcul (102, 130) comprend un étage d'exécution (108, 136) configuré pour utiliser lesdits un ou plusieurs circuits de mémoire (128) pour mettre en œuvre l'IMC.

2. Circuit de calcul (100) selon la revendication 1, dans lequel au moins un desdits circuits de mémoire (128) est intégré dans le cœur de calcul (102, 130) et configuré pour être utilisé comme unité fonctionnelle pour l'IMC de l'étage d'exécution (108, 136) du cœur de calcul (102, 130).

3. Circuit de calcul (100) selon l'une quelconque des revendications précédentes, comprenant en outre une interconnexion (114) reliant le cœur de calcul (102, 130) à au moins une mémoire à couplage étroitement couplé (116, 128), TCM, et à un bus (118) auquel une mémoire externe (120) est reliée.

4. Circuit de calcul (100) selon la revendication 3, dans lequel ladite au moins une TCM correspond à au moins un desdits un ou plusieurs circuits de mémoire (128).

5. Circuit de calcul (100) selon l'une quelconque des revendications précédentes, dans lequel l'étage d'exécution (108, 136) du cœur de calcul (102, 130) comprend au moins un contrôleur de flux (146) et au moins un desdits un ou plusieurs circuits de mémoire (128) est connecté au contrôleur de flux (146) par l'intermédiaire de liaisons de flux d'entrée et de sortie.

6. Circuit de calcul (100) selon l'une quelconque des revendications précédentes, comprenant en outre un cœur de calcul vectoriel (130) configuré pour mettre en œuvre des calculs sur des données vectorielles et comprenant une architecture en pipeline RISC-V.

7. Circuit de calcul (100) selon la revendication 6, dans lequel au moins un desdits un ou plusieurs circuits de mémoire (128) est intégré dans le cœur de calcul vectoriel (130) et configuré pour être utilisé comme unité fonctionnelle pour l'IMC d'un étage d'exécution (136) du cœur de calcul vectoriel (130).

8. Circuit de calcul (100) selon la revendication 3 ou 4 et la revendication 6 ou 7, dans lequel l'interconnexion (114) relie également le cœur de calcul vectoriel (130) à la TCM (116, 128) et au bus (118) auquel la mémoire externe (120) est reliée.

9. Circuit de calcul (100) selon l'une quelconque des revendications 6 à 8, dans lequel le cœur de calcul vectoriel (130) comprend un jeu d'instructions qui inclut des instructions de lecture de mémoire vectorielle pour extraire des données tensorielles (202) qui constituent une matrice tridimensionnelle, à partir d'une mémoire externe (120) vers au moins un fichier de registres vectoriels (134) du cœur de calcul vectoriel (130), de sorte que les données tensorielles (202) soient aplaties selon un ordre Z > Y > X, X, Y et Z correspondant aux trois axes de la matrice.

10. Circuit de calcul (100) selon l'une quelconque des revendications précédentes, dans lequel le cœur de calcul (102, 130) comprend un jeu d'instructions qui inclut des instructions de manipulation de données configurées pour, pendant des première et deuxième convolutions successives de données tensorielles (202) avec des données de noyau (200), décaler les données tensorielles (202) stockées dans au moins un fichier de registres (112, 134) du cœur de calcul (102, 130) et utilisées pour la première convolution de sorte qu'une partie des données tensorielles (202) communes aux première et deuxième convolutions soit conservée dans le fichier de registres (112, 134).

11. Circuit de calcul (100) selon l'une quelconque des revendications précédentes, dans lequel le cœur de calcul (102, 130) est configuré pour charger en parallèle, en un seul cycle, des données stockées dans plusieurs registres d'au moins un fichier de registres (112, 134) du cœur de calcul (102, 130) dans un emplacement d'au moins un desdits un ou plusieurs circuits de mémoire (128).

12. Circuit de calcul (100) selon l'une quelconque des revendications précédentes, dans lequel le cœur de calcul (102, 130) comprend au moins un fichier de registres (112, 134) configuré pour stocker plusieurs sommes partielles (222) résultant de convolutions mises en œuvre par le cœur de calcul (102, 130).

13. Circuit de calcul (100) selon l'une quelconque des revendications précédentes, dans lequel lesdits un ou plusieurs circuits de mémoire (128) sont des circuits d'IMC numériques et/ou analogiques.

14. Circuit de calcul (100) selon l'une quelconque des revendications précédentes, dans lequel le cœur de calcul (102) comprend au moins un fichier de registres (112) et au moins quatre étages comportant un étage d'extraction d'instructions (104), un étage de décodage d'instructions (106), l'étage d'exécution (108), et un étage de réécriture (110).

15. Appareil (1000) comprenant au moins un circuit de calcul (100) selon l'une quelconque des revendications précédentes, et dans lequel l'appareil (1000) est un microprocesseur ou un microcontrôleur ou un système sur puce, SoC.
